(19) Europäisches Patentamt
European Patent Office
Office européen des brevets

(11) EP 3 281 788 A1

(12) EUROPEAN PATENT APPLICATION

(43) Date of publication:
**14.02.2018 Bulletin 2018/07**

(21) Application number: **16183923.8**

(22) Date of filing: **12.08.2016**

(51) Int Cl.:
***B32B 27/08*** (2006.01) ***B32B 9/02*** (2006.01)
***B32B 27/06*** (2006.01) ***B32B 27/18*** (2006.01)
***B32B 27/28*** (2006.01) ***B32B 27/30*** (2006.01)
***B32B 27/32*** (2006.01) ***B32B 27/34*** (2006.01)
***B32B 27/36*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Clariant International Ltd**
**4132 Muttenz (CH)**

(72) Inventors:
- **MULLER, Thierry**
  **9026 Ettelbruck (LU)**
- **DECORTES, Antonello**
  **20149 Milan (IT)**

(74) Representative: **Hütter, Klaus**
**Clariant Produkte (Deutschland) GmbH**
**Patent Management**
**Industriepark Höchst, G 860**
**65926 Frankfurt am Main (DE)**

# (54) OXYGEN BARRIER PLASTIC MATERIAL

(57) The invention relates to a multilayer packaging film comprising at least three different types of layers (A), (B), and (C):
(A) is at least one outer layer,
(B) is at least one passive oxygen barrier layer,
(C) is at least one active oxygen scavenging layer,
characterized in that
- the at least one outer layer (A) is a thermoplastic polymer;
- the at least one passive oxygen barrier layer (B) is selected from the group consisting
of ethylene vinyl alcohol copolymers, polyvinylchloride, copolymers of polyvinyl chloride, polyvinyl alcohol, polyvinylidene dichloride, copolymers of polyvinylidene dichloride, polyacrylonitrils, copolymers of polyacrylonitrils, polyethylene terephthalate, polyethylene naphthalate, polyethylenefuranoate, polysiloxanes, and polyamides;
- the at least one active oxygen scavenging layer (C) comprises
a) a plastic material which is a polyolefin, a polyolefin copolymer or a polystyrene,
and additives (b) and (c), wherein
b) is a polyterpenic resin; and
c) is a transition metal catalyst.

FIG 1.

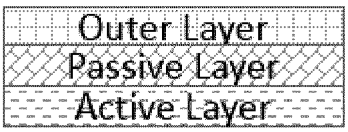


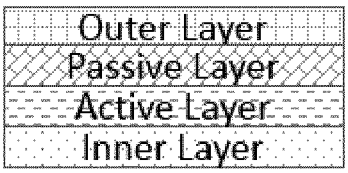


EP 3 281 788 A1

## Description

The present invention relates to oxygen barrier plastic materials comprising an organic polymer and a polyterpenic resin active oxygen barrier to enhance the quality and shelf life of oxygen-sensitive products in packaging applications. It also relates to oxygen barrier plastic materials that can be processed into multilayer rigid containers or flexible films to impart oxygen barrier properties at an enhanced clarity compared to other oxygen barrier compositions known in the art. Furthermore, the present invention relates to the use of oxygen barrier compositions in food, beverage and pharmaceutical packaging and to plastic material and articles comprising said oxygen barrier compositions.

For the purposes of the invention, masterbatches (MB) are compositions comprising a polymeric carrier or a liquid vehicle and an additive, where the additive is present in the masterbatch in higher concentrations than in the final application or in the final article, and the carrier does not have to be the organic polymer of the final application or of the final article. Preferred concentrations of the additives in a masterbatch range preferably of from 0.5 to 90 % by weight, more preferably of from 1 to 80 % by weight, the % by weight based in each case on the total weight of the masterbatch.

For the purposes of the invention, compounds (CO) are compositions comprising an organic polymer and an additive, where the additive is present in the compound in the desired concentration for the final application or for the final article, and the organic polymer is the organic polymer of the final application or of the final article, so that the compound is merely brought to the desired shape of the final application or of the final article by means of a physical shaping process.

Packaging for food and beverage, personal care, medical, pharmaceutical, household and industrial products, require high barrier properties to oxygen to preserve the freshness and quality of the package contents. Containers made of traditional materials like glass or metal provide an excellent barrier both to egress of substances from the container and to ingress of substances from the environment. In most instances, gas permeation through a glass or metal container is negligible. Nevertheless, due to the potentially lower cost and functional advantages (such as thermo-sealability, microwavability, optical properties, lightweight, decrease breakage and unlimited sizes and shapes) over materials such as glass and metal, there has been an increasing use of plastic materials in packaging in recent years. Polymeric material commonly used in packaging applications are polyolefins (i.e. LDPE, LLDPE, PP) and polyethylene terephthalate resin (PET). Both polyolefins (from now on POs) and PET have a number of advantageous properties for use in packaging applications, but they do not possess the gas barrier properties that are required or desired in many oxygen sensitive applications. In fact there are polymers that are, for example, good oxygen barriers but poor water-vapour barriers and vice-versa. Barrier polymers often rely on dipole-dipole interactions to reduce chain mobility, and hence diffusional movements to permeants. Polymers without dipole-dipole interactions like POs for instance dissolve very little water but have great affinity and are very permeable to non-polar molecules like $O_2$ and $CO_2$. PET on the other hand is less porous and interacts poorly with oxygen although water molecules easily hydrogen-bond and permeate through the matrix.

A number of solutions to overcome barrier problems associated with plastic containers have been proposed.

The packaging industry has developed, for example, multilayer structures comprising mixed polymer layers. These laminated packaging containers offer improved barrier properties, which, although not comparable, approach those of glass and steel. Maintaining the proper balance of recyclability, barrier properties and clarity is most critical in many rigid and flexible packaging applications.

The use of multilayer films or bottles that contain an inner, sometimes sandwiched, layer of a higher barrier polymer material compared to the outer polymer layers is commonplace. Typically, the centre layer is a high barrier polymer that slows the permeability of oxygen through the container wall. Such a system is categorized as a passive barrier. Examples of most common high barrier polymers include ethylene-vinyl alcohol (EVOH) and polyamides. A common construction for such multilayer structures would comprise inner and outer layers of POs with a centre layer of ethylene-vinyl alcohol (EVOH) or polymer inner and outer layers of PET with a centre layer of a polyamide.

One of the advantages of using polymers such as EVOH, instead of other materials imparting oxygen barrier properties such as thin metal foil or vapour-deposited layers of inorganic oxides, is that polymer-processing techniques such as extrusion, injection moulding, film blowing, are available with no need of any post-treatment after production. However, EVOH suffers from the drawback of being water sensitive and to maintain its oxygen barrier properties it is usually necessary to coat or laminate it with moisture-barrier materials such as polyolefins. This drawback of EVOH represent a major challenge that plastic material transformers and food, pharmaceutical, personal care, consumer goods and electronics companies are currently facing. In fact, what happens is that in relative humidity (from now on r.h.) conditions of above 65 % (in accordance with ISO 144663-2), EVOH slowly absorbs moisture from the environment due to the hydrophilic nature of its hydroxyl groups, until it reaches the equilibrium of r.h.. During this process, EVOH loses its crystalline structure and consequently its barrier properties against oxygen ingress. As an example, food packaging articles are easily exposed to such conditions in various circumstances, for instance during transportation throughout countries with a humid tropical climate or more simply when foods with a high level of moisture are packaged. High r.h is not the only condition that can have detrimental effects on the oxygen barrier properties of packaging where EVOH

is used; also, temperatures as low as 30 °C have a negative effect. In this case, the loss of barrier properties proceeds exponentially with the increasing temperature eventually leading to a point where EVOH is completely inefficient. Oxygen is at this point free to enter the packaging by permeating through the packaging walls and thus accelerating the process of spoilage its sensitive content inevitably goes through. This detrimental effect (both due to humidity and/or high temperature) is a relatively long lasting one and normally, before the crystalline structure of EVOH molecules is re-established, it can take up to 7 days (providing the package can avoid during that time the above mentioned conditions). The consequences for food producers are quite extensive since due to the nature of the product that is packaged (i.e. hot and/or aseptic fill require filling of the packaging container with products heated at temperature up to 120 °C and beyond), the inability to offer a cold chain storage or delayed transportation times under high r.h. and/or temperature conditions, inevitably shortens the shelf life of foods. Some additional major consequences are the enormous amount of food that are wasted every year worldwide due to companies that are unable to guarantee a shelf life long enough for distribution of all of their products globally.

To further reduce the entry of oxygen into the packaging, small amounts of transition metal salts can be added to POs blends to catalyse and actively promote the oxidation of an additive, thereby further enhancing the oxygen barrier characteristics of the package itself. This method of providing oxygen barrier properties where a substance consumes or reacts chemically or biologically with the oxygen is known as an active oxygen barrier and differs from the passive oxygen barriers which attempt to physically slow down the permeation of oxygen across the packaging walls.

Currently viable solutions comprise the use of systems that are rather complex. These often require water to be present in order for the oxygen scavenger to be activated. Humidity has to come e.g. from the product contained in the package (very often the food itself) and thus excluding, for example, dry food from the spectrum of applications those technologies can be applied to. In addition, in other cases, U.V.-Vis irradiation is necessary in order to activate the scavenging action of the barrier components, thus requiring the use of additional processing steps.

Beyond pure performance and protection of the packaged product, appearance is also a key element to product differentiation. The trend towards transparent materials has become critical to the food packaging industry in recent years and continues to gain momentum. In those applications requiring clarity, and particularly for POs applications, the packaging article should have optical properties approaching those of the virgin polymer. Product visibility is a powerful tool, both functionally and aesthetically. It allows end-consumers to readily see what product they are buying and check its appearance without opening the packaging and enables product manufacturers to easily inspect the packaged product with vision systems, metal detectors and manual visual inspection.

As mentioned, in barrier layers of packaging articles that are made from blends of oxygen barrier materials with resins such as POs, haze can result from I) the immiscibility of the barrier materials with the base polymer, II) the inability to create disperse-phase domains that are small enough as not to interfere with the passage of light and III) the adverse influence of the barrier material on the crystallization behaviour of POs. One approach to minimize such haze is the careful selection of base resin to improve dispersion of the barrier material and, thus, reduce, but not substantially eliminate, haze; and to minimize the adverse crystallization effect. This approach may restrict the choice of base polymer resin. Another approach is to use compositions that serve as compatibilizers to reduce haze. These approaches add cost to the barrier layer and the compatibilizer adds an additional material that must be evaluated for its suitability for contact with food. Thus, there is a need for improved plastic materials, which provide high oxygen barrier capability and are substantially transparent.

The possibility of including the active oxygen barrier additive directly into the polymer matrix of the final article represents a clear advantage when compared to inventions where, for example, the barrier material is separated from the food by keeping it in a small, highly oxygen permeable sachet. The disadvantage of such system includes the need for additional packaging steps as well as risks in case of potential contamination where the sachet should break or a consumer should accidentally ingest it.

US-8609744 discloses an oxygen scavenging mixture comprising an oxidisable metal component and, among others, an electrolyte component to be mixed with LDPE. Such systems have the disadvantage that moisture coming from the food itself is essential to trigger the scavenging effect, thus leaving out applications for dry foods.

EP-2112201 discloses a composition comprising a polyolefin, a metal based oxygen scavenger, a clay or nucleating agent, and a polyamide nylon based masterbatch containing EVOH, a nanoclay and a compatibilizer.

EP-0918818 discloses an oxygen scavenging composition comprising an oxidizable polyterpene and a metal catalyst effective in catalysing oxygen scavenging in plastic materials. Only applications on monolayer films are described.

WO-9625058 discloses an oxygen scavenging system where an oxidizable polyterpene and a metal catalyst have to be placed into two separate layers of a multilayer film.

WO 02/36670 discloses a masterbatch of cobalt stearate with an oxidizable resin.

Summarising, a number of attempts have been made to prepare oxygen barrier and/or scavenging articles. There have been numerous approaches involving the use of laminated structures, and others involving the incorporation of inorganic powders, salts and/or sacrificial oxidizable compounds. Most of these systems have at least one or several disadvantages including poor processing properties, compromising of the film mechanical strength, lack of barrier effect

if exposed to certain relative humidity or temperature, insufficient oxygen uptake, moisture or UV-Vis activation requirements and most of them also suffer from poor clarity and lack of recyclability.

A need exists for improved oxygen barrier compositions, methods for the production of said compositions and methods of using these compositions in packaging articles that satisfy all the recited demands. Specifically, a need exists for multilayer transparent, thin walled articles and containers with excellent barrier and scavenging capabilities, whose performance does not depend on the absence of moisture or high temperature to preserve passive barrier properties or presence of water or UV light for activating the scavenging effect.

In particular, it would be desirable to obtain improved gas barrier POs compositions that can be blown or cast as film or sheet or extrusion blow moulded as multilayer containers with reduced haze and without any further activation. This is particularly required for containers that need a long(er) shelf life, such as fresh and processed meat, ready meals and other oxygen sensitive materials.

BRIEF DESCRIPTION OF THE INVENTION

Within the scope of the present invention is a multilayer film having a multilayer oxygen barrier component comprising at least three layers in which at least one of the layers is a passive oxygen barrier layer and at least one of the layers is an active oxygen scavenging layer absorbing oxygen at a rate faster than the oxygen permeation through the packaging wall and sandwiched between the passive oxygen barrier layer and the inside of the packaging. Additionally, shelf life products' requirements impose that the oxygen scavenging activity should be maintained for extended periods.

Surprisingly, it has been found that:

(a) by using a polyterpene-based additive as active oxygen scavenger in polyolefin plastic materials in combination with a transition metal catalyst as specified hereinafter

(b) when such system as in (a) make up one or more layers of a multilayer plastic film where at least one of these layers is internal with respect to a passive barrier layer and the inside of the packaging

(c) when such multilayer film is exposed to conditions of high relative humidity (65 % or above) and/or high temperature (30 °C or above),

the barrier properties of the packaging material are

- retained equivalent to those of the packaging stored at lower r.h. conditions (below 65 %)
  and/or
- improved up to 1.5 times with respect to packaging articles stored at lower temperature (below 30 °C).

This is achieved thanks to the active oxygen scavenging layer, which is able to compensate for the increased oxygen ingress through the packaging wall even when environmental or induced conditions of high r.h. or temperature change the crystalline structure of the passive barrier layer, which is then no longer able to block $O_2$ ingress.

The present invention relates to a multilayer packaging film comprising at least three different types of layers (A), (B), and (C):

(A) is at least one outer layer,
(B) is at least one passive oxygen barrier layer,
(C) is at least one active oxygen scavenging layer,

characterized in that

- the at least one outer layer (A) is a thermoplastic polymer, preferably selected from the group consisting of polyolefins, polystyrenes, polyurethanes, polyvinylchloride and copolymers thereof;
- the at least one passive oxygen barrier layer (B) is selected from the group consisting of ethylene vinyl alcohol copolymers, polyvinylchloride, copolymers of polyvinyl chloride, polyvinyl alcohol, polyvinylidene dichloride, copolymers of polyvinylidene dichloride, polyacrylonitrils, copolymers of polyacrylonitrils, polyethylene terephthalate, polyethylene naphthalate, polyethylenefuranoate, polysiloxanes, and polyamides;
- the at least one active oxygen scavenging layer (C) comprises

  a) a plastic material which is a polyolefin, a polyolefin copolymer or a polystyrene,
  and additives (b) and (c): wherein
  b) is a polyterpenic resin, preferably produced by polymerization and/or copolymerization of cyclic or acyclic monoterpene hydrocarbons;

c) is a transition metal catalyst.

The term outer layer defines a layer which is located at the outside of the packaging article and which is usually in contact with the surrounding environment.

In a preferred embodiment of the invention, the multilayer packaging film further comprises at least one inner layer (D) which is a thermoplastic polymer, preferably selected from the group consisting of polyolefins, polystyrenes, polyurethanes, polyvinylchloride and copolymers thereof.

The term inner layer defines a layer which is the innermost layer of the package. An inner layer acts as *sealant layer*, being the one that is in direct contact with the product contained inside of the packaging.

According to the present invention, the additives b) and c) are combined in the same oxygen scavenging layer.

In another embodiment the multilayer packaging film comprises an oxygen barrier component in which a passive barrier layer is sandwiched between two active oxygen scavenging layers.

In some embodiments an adhesive or functional layer may be placed between the different layers (A), (B), and/or (C) and/or optionally D.

Multilayer packaging films according to the present invention can be used in numerous packaging articles such as, but not limited to, films, flexible or rigid sheets, flexible bags, pouches, laminated or not-laminated thermoformed containers, rigid or semi-rigid containers or combinations thereof.

Having thus described the invention in general terms herein follows a brief explanation of the attached graphs and drawings. When applicable, these are not necessarily drawn to scale. Applicability of the invention to multilayer structures is not to be bound to the following structures only but also to analogous laminated or not-laminated multilayer structures. In the Figures, "Passive layer" means passive oxygen barrier layer and "Active layer" means active oxygen scavenging layer.

FIG1. This is a cross-sectional side view of a multilayer film that is in accordance with the present invention. It can be observed that the active oxygen-scavenging layer is sandwiched between the passive oxygen barrier layer and the inside of the packaging or an additional inner/sealant layer. The film might include tie or adhesive layers when required by compatibility issues between different layers.

FIG2. This is a cross-sectional side view of a multilayer film that is in accordance with the present invention. It can be observed that the passive oxygen barrier layer is sandwiched between two active oxygen-scavenging layers. The film might include tie layers between the active layers and the passive barrier layer or between the active layers and the adjacent outer and/or the optional inner layer.

FIG3. This is a cross functional side view of a multilayer films that is in accordance with the present invention. It can be observed that the active oxygen-scavenging layer is sandwiched between two subsequent passive oxygen barrier layers and the inside of the packaging or an additional inner/sealant layer. The film might include tie or adhesive layers when required by compatibility issues between different layers.

FIG4. This is a cross-sectional side view of a multilayer film that is in accordance with the present invention. It can be observed that the active oxygen-scavenging layer is sandwiched between two passive oxygen barrier layers. The film might include tie layers between the outer layer and the first passive barrier layer, the active oxygen-scavenging layer and the two passive barrier layer and the last passive barrier layer and the inner layer.

FIG5. This is a cross-sectional side view of a multilayer film that is in accordance with the present invention. It can be observed that the passive oxygen barrier layer is sandwiched between two active oxygen-scavenging layers. The film might include tie layers between the outer layer and the first active oxygen-scavenging layer, the passive oxygen barrier layer and the two active oxygen-scavenging layers and the last oxygen-scavenging layer and a polyethylene (PE) layer.

FIG6. This is a cross-sectional side view of a multilayer film that is in accordance with the present invention. It can be observed that two active oxygen-scavenging layers are sandwiched one between two passive barrier layer and one between one of the passive barriers and the outer layer. The film might include tie layers between the outer layer and the first active oxygen-scavenging layer, the first passive oxygen barrier layer and the two active oxygen-scavenging layers, the second oxygen-scavenging layer and the two passive barriers and the last passive barrier and the inner layer.

FIG7. This is a cross-sectional side view of an example of laminated multilayer film that is in accordance with the present invention. It can be seen that a polyvinylidene chloride (from now on PVdC) layer is sandwiched between

a PET layer that functions as outer layer and a first active oxygen scavenging layer. The passive oxygen barrier layer is sandwiched between two active oxygen scavenging layers. An inner layer can be optionally present. The film might include tie or adhesive layers when required by compatibility issues between different layers.

FIG8. This is a cross-sectional side view of an example of laminated multilayer film that is in accordance with the present invention. It can be seen that a PVdC layer is sandwiched between a PET layer that functions as outer layer and a first passive barrier layer. The active oxygen scavenging layer is sandwiched between two passive oxygen barrier layers. An inner layer can be optionally present. The film might include tie or adhesive layers when needed.

Oxygen barrier, as in the present invention, refers to the reduction or elimination of oxygen permeation inside of a packaging article by providing a substance that reacts with, absorbs and/or consumes oxygen. This is known as an active oxygen barrier and differs from the passive oxygen barriers, which attempt to hermetically seal a product away from oxygen. A passive oxygen barrier layer does not always completely impede the permeation of oxygen inside of the packaging but rather slows down its ingress up to a certain extent.

For all embodiments of this invention, it is preferable for at least one of the active oxygen scavenging layers to be sandwiched between a passive oxygen barrier layer and an inner layer or, when this is lacking, the inside of the packaging itself.

It is subsequent that all the illustrated embodiments reported in FIG2 to FIG8 also fall within this definition. In these and other embodiments one or more intermediate layers (e.g. tie or adhesive layers) may be disposed between any of the layers interfaces of the multilayer film and more specifically anywhere the need for binding two layers which otherwise would be incompatible requires their use.

FIGS 1 to 8 report a series of possible embodiments of this invention where the various components are combined in a variety of ways in order to produce the multilayer film. The converters of plastic materials normally decide the structure of a multilayer film based of the specific need of the food producers and on the nature of the good that should be contained and protected by the package. It is therefore impossible to cite in this patent every possible multilayer structure that is employed nowadays. Nonetheless, FIGS 1 to 8 represent configurations that are representative of real packaging structures but do not necessarily comprise all of the embodiments the invention could be applied to.

The crystalline structure of some of the most commonly used passive barriers significantly alter by exposure to humidity above 65 % (when wet foods are packaged or when the packaging is exposed during transportation or storage to such environmental conditions) or temperature above 30 °C (during packaging sterilization processes or environmental conditions of storage and/or transportation). The modification of crystallinity is not a permanent effect, but the material can revert to its original crystalline state if and once the above-mentioned conditions are prevented. The time required for this reversible process to occur can take up to a week or longer. During this time, oxygen is able to permeate through the packaging with faster permeation rates thus shortening the shelf life of the foods or drugs contained within. Normally to limit this from happening, moisture barrier layers have to be interposed between the passive barrier layer and the surface of the film that is exposed to high moisture.

The oxygen barrier compositions of the invention can be used to produce multilayer films that are able to compensate for the loss of performance of the passive barrier, thus reaching levels of oxygen transmission rate that are similar to those of the same multilayer film that has not been exposed to high humidity and/or temperature.

Active oxygen scavenging layer (C)

In general, the active oxygen scavenger layer stops oxygen coming from the outside of the packaging while permeating through the polymer matrix by chemically reacting with it. The same reaction also can occur with oxygen that might have remained trapped inside of the packaging at the moment of sealing/closure thus maintaining constant or lowering the concentration of oxygen inside of the final article for an extended time. An active scavenger layer normally has an absorption capacity that is at least 0.1 cc/($g_{scavenger}$*day).

Preferred polyolefins and polyolefin copolymers, i.e. component (A) and/or (D) within the meaning of the invention, are thermoplastic polyolefins known in the art and are selected from the group consisting of

- polyethylene (PE), preferably selected from the group consisting of high density polyethylene (HDPE), medium density polyethylene (MDPE), low density polyethylene (LDPE), linear low density polyethylene (LLDPE), metallocene low density polyethylene (mLDPE) and metallocene linear low density polyethylene (mLLDPE),
- polypropylene (PP), preferably selected from the group consisting of polypropylene homopolymer (PPH), polypropylene random copolymer (PP-R) and polypropylene block copolymers (PP-block-COPO),
- PE copolymers, preferably selected from the group consisting of ethylene-vinyl acetate copolymers (EVA), copolymers of ethylene and methyl acrylate (EMA), copolymers of ethylene and butyl acrylate (EBA), copolymers of ethylene and ethyl acrylate (EEA), and cycloolefin copolymers (COC),

- general purpose polystyrene (GPPS) and high impact polystyrene (HIPS); more preferably of
- high density polyethylene (HDPE) and low density polyethylene (LDPE)
- polypropylene homopolymer (PPH),
- general purpose polystyrene (GPPS).

Preferred polystyrenes, i.e. component (A) and/or (D) within the meaning of the invention, can be a styrene homopolymer, an alkylstyrene homopolymer, preferably a $C_1$-$C_4$-alkylstyrene homopolymer, for example $\alpha$-methylstyrene homopolymer; a styrene copolymer, especially a high impact polystyrene (HIPS).

High impact polystyrenes (HIPS) are generally prepared by polymerization by grafting mixtures of styrene and optionally of one or more copolymerizable vinyl monomers, preferably mixtures of styrene, methylstyrene, ethylstyrene, butylstyrene, halostyrenes, vinylalkylbenzenes, such as vinyltoluene, vinylxylene, acrylonitrile, methacrylonitrile, lower alkyl esters of methacrylic acid, in the presence of a rubbery polymer trunk comprising copolymers chosen from polybutadiene, polyisoprene, rubbery styrene-diene copolymers, acrylic rubber, nitrile rubber and olefinic rubbers, such as propylene diene monomer rubber (PDM) and propylene rubber (PR). In the high impact polystyrene, the rubbery polymer trunk normally constitutes from 5 to 80 % by weight, preferably 5 to 50 % by weight, of the total weight of the grafted polymer.

The preferred density of component (A) and/or (D) is of from 1.0 to 1.1 g/$cm^3$, more preferably of from 1.02 to 1.06 g/$cm^3$, even more preferably of from 1.03 to 1.05 g/$cm^3$.

Preferred polystyrenes are polystyrenes with a MFR at 200 °C/5 kg according to ISO 1133 of from 0.1 to 300 g/10 min, more preferably of from 1 to 200 g/10 min, even more preferably of from 5 to 100 g/10 min, especially of from 10 to 50 g/10 min, more especially of from 15 to 35 g/10 min, in particular of from 20 to 25 g/10 min.

The additive (b) being a polyterpene resin contains cyclic or acyclic monomers preferably selected form alpha-pinene, beta-pinene, gamma-ter-pinene, limonene, norbornene, myrcene, phellandrene, carvone, camphene, 2-carene, 3-carene, perillyl alcohol, perillyl aldehyde, perillyl acid, alkyl esters of perillyl alcohol, aryl esters of perillyl alcohol, arylalkyl esters of perillyl alcohol, alkylaryl esters of perillyl alcohol, alpha-ionone, beta-ionone, beta-citronellol, beta-citronellene, citronellal, citronellic acid, alkyl esters of beta-citronellol, aryl esters of beta-citronellol, arylalkyl esters of beta-citronellol, alkylaryl esters of beta-citronellol, geraniol, geranial, alkyl esters of geraniol, aryl esters of geraniol, arylalkyl esters of geraniol, alkylaryl esters of geraniol, linalool, alkyl esters of linalool, aryl esters of linalool, arylalkyl esters of linalool, alkylaryl esters of linalool, nerolidol, alkyl esters of nerolidol, aryl esters of nerolidiol, arylalkyl esters of nerolidiol, alkylaryl esters of nerolidiol, verbenol, verbenone, alkyl esters of verbenol, aryl ester verbenol, arylalkyl esters of verbenol, alkylaryl esters of verbenol and mixtures thereof.

In other specific embodiments, the polyterpene resins can also be copolymers of unsaturated monoterpenes, such as alpha-pinene, beta-pinene, gamma-ter-pinene, limonene, norbornene, myrcene, phellandrene, carvone, camphene, 2-carene, 3-carene, perillyl alcohol, perillyl aldehyde, perillyl acid, alkyl esters of perillyl alcohol, aryl esters of perillyl alcohol, arylalkyl esters of perillyl alcohol, alkylaryl esters of perillyl alcohol, alpha-ionone, beta-ionone, beta-citronellol, beta-citronellene, citronellal, citronellic acid, alkyl esters of beta-citronellol, aryl esters of beta-citronellol, arylalkyl esters of beta-citronellol, alkylaryl esters of beta-citronellol, geraniol, geranial, alkyl esters of geraniol, aryl esters of geraniol, arylalkyl esters of geraniol, alkylaryl esters of geraniol, linalool, alkyl esters of linalool, aryl esters of linalool, arylalkyl esters of linalool, alkylaryl esters of linalool, nerolidol, alkyl esters of nerolidol, aryl esters of nerolidiol, arylalkyl esters of nerolidiol, alkylaryl esters of nerolidiol, verbenol, verbenone, alkyl esters of verbenol, aryl ester verbenol, arylalkyl esters of verbenol, alkylaryl esters of verbenol,
with ethylenically unsaturated monomers that are petroleum-based or come from renewable sources such as styrene, alpha-methylstyrene, alkyl acrylates, alkyl methacrylates, vinyl alkonates such as vinyl acetate, vinyl butyrate or the like, ethylene vinyl acetate, styrene-maleic anhydride, and similar monomers.

Preferred embodiments of additive (b) are polyterpene resins of either homopolymers or copolymers of unsaturated cyclic monoterpenes, such as alpha-pinene, beta-pinene, d-limonene, mixtures of alpha/beta-pinene or the like, and blended combinations thereof.

In a more preferred embodiment of the present invention, the additive (b) is either a homopolymer or copolymer of alpha-pinene, beta-pinene or mixtures of alpha/beta pinene.

A particularly preferred additive (b) is a beta-pinene resin, expediently with an average Mw of at least 2500 g/mol.

Preferably, the additive (b) is used in an amount of from 0.05 to 10 %, more preferably 0.1 to 3.5 %, most preferably 0.1 to 2 %, by weight, based on the total weight of the respective active oxygen scavenging layer (C).

Additive (c) within the meaning of the invention is a transition metal catalyst that initiates and accelerates the rate of oxygen consumption. The catalyst may or may not be consumed with oxygen, or if consumed, may only be consumed temporarily by converting back to a catalytically active state.

More preferably, the transition metal catalyst is a salt, with the transition metal selected from the first, second or third transition series of the Periodic Table of the Elements. Suitable metals and their oxidation states include, but are not limited to, manganese II or III, iron II or III, cobalt II or III, nickel II or III, copper I or II, rhodium II, III or IV, and ruthenium. The oxidation state of the metal when introduced does not need necessarily to be that of the active form.

The metal is preferably iron, nickel, manganese, cobalt or copper; more preferably manganese or cobalt; and even more preferably cobalt. Suitable counterions for the metal include, but are not limited to, chloride, acetate, acetylacetonate, propionate, oleate, stearate, palmitate, 2-ethylhexanoate, octanoate, neodecanoate or naphthenoate.
The metal salt can also be an ionomer, in which case a polymeric counterion is employed. Such ionomers are well known in the art.
Even more preferably, the salt, the transition metal, and the counterion are either compliant with country regulations in the matter of food contact materials or, if part of a packaging article, exhibit substantially no migration from the oxygen barrier composition to the packaged contents. Particularly preferable salts include cobalt oleate, cobalt propionate, cobalt stearate, and cobalt neodecanoate.
Preferably, the transition metal catalyst (c) is used in an amount of from 0.001 to 1 %, more preferably 0.01 to 0.5 %, by weight, based on the total weight of the respective active oxygen scavenging layer (C).
The thickness of the active oxygen scavenging layers in comparison to the total thickness of the multilayer film can range from 1 to 50%, preferably between 5 to 45 %, more preferably between 9 to 43% and even more preferably between 7 to 42 %.

Passive oxygen barrier layer (B)

A passive barrier normally comprises a polymeric material that cannot react chemically with the oxygen that permeates through a layer made thereof, but rather slows down its ingress by creating a tortuous path for the oxygen molecules to permeate from one side of the packaging at higher oxygen concentration to the other at lower oxygen concentration.
In the scope of this invention, a passive barrier can include any material that might alter its barrier performance at conditions of temperature and r.h. that exceed the already mentioned thresholds.
There are many oxygen barrier polymers that can be used as passive oxygen barrier layers. If more than one passive barrier layers are present as in FIGS 3, 4, 6 and 7, these layers can be the same or different from one another.
The oxygen barrier polymer can be selected from a group including but not limited to ethylene vinyl alcohol copolymers, polyvinyl chloride and its copolymers, polyvinyl alcohol, polyvinilydene dichloride and its copolymers, polyacrilonitriles and its copolymers, polyethylene terephthalate, polyethylene naphthalate (PEN), polyethylene furanoate (PEF), silicones ($SiO_x$), polyamides such as polycaprolactam (nylon 6), meta-xylene adipamide (MXD6), hexamethylene adipamide (nylon 66), amorphous polyamides, such as nylon 6I,6T, and also copolymers and blends of the above.
Preferred polymers are ethylene vinyl alcohol copolymers and polyamides such as polycaprolactam (nylon 6), meta-xylene adipamide (MXD6), hexamethylene adipamide (nylon 66).
Alternative material that classify as a passive oxygen barrier layers also include metal foil layers, metal coatings or metal depositions, metal oxides like silica, alumina, nano clays and vermiculate.
The thickness of the passive oxygen barrier layer can vary widely according to the number of other layers, functionality and desired performance and can range from 1 to 100 μm, preferably between 1.5 to 50 μm, more preferably between 2 to 10 μm and even more preferably between 3 and 5 μm.
The thickness of the passive oxygen barrier layers in comparison to the total thickness of the multilayer film can range from 1 to 50%, preferably between 2 to 40 %, more preferably between 3 to 30% and even more preferably between 4 to 10 %.

Outer layers (A) and inner layers (D)

The inner layer of a multilayer film is defined here as the layer which is directly exposed to the content of the packaging. This layer normally functions as sealant layer since it is responsible for ensuring the heat-sealing and subsequent airtight isolation of the goods contained inside when adhering to a support article like for instance a tray, another film or, as in a pouch, to the multilayer film itself. Within the embodiments of this invention, the inner layer may therefore comprise a single polymeric material or a blend thereof.
The term "outer layer" is defined above.
Both the inner or outer layer may be the same or different in material which may include thermoplastic polymers like polyolefins, polystyrenes, polyurethanes, polyvinyl chloride and ionomers. Polymeric material useful in this respect include homo- and copolymers of ethylene and propylene such as, but not limited to, low density polyethylene, ethylene/alpha-olefin copolymers, medium density polyethylene, linear low density polyethylene, linear medium density polyethylene, very low density polyethylene, ultra-low density polyethylene, polypropylene homopolymer and polypropylene copolymer. The mentioned polymers can be prepared with many different procedures and catalysts and can be either homogeneous or heterogeneous.
The thickness of the inner layer or of the outer layer in comparison to the total thickness of the multilayer film can range from 1 to 50%, preferably between 5 to 45 %, more preferably between 14 to 44% and even more preferably

between 15 to 42 %.

Each of the layers (A), (B), (C) and (D) may also comprise further customary additives (d) like compatibilizers, antioxidants (different from the oxygen scavenger (b)), heat stabilizers, colorants, fillers, acid scavengers, processing aids, coupling agents, lubricants, blowing agents, polyhydric alcohols, nucleating agents, antistatic agents, light-stabilizers, process stabilizers, clarifiers, UV absorbers, slip agents, antifogging agents, anti-condensation agents, suspension stabilizers, anti-blocking agents, waxes, and mixtures of these substances. The concentration of said auxiliaries can vary between 0 to 20%, preferably 0.001 to 10 %, more preferably 0.1 to 5%, by weight, relative to the total weight of the respective layer.

These layers can optionally be combined with moisture barrier layers, strengthening layers and adhesive layers. Compositions typically used for adhesive layers include well-known anhydride functional polyolefins, e.g. ®Admer types (Mitsui).

The multilayer packaging film of the present invention provides an improvement in oxygen transmission rate ($cm^3/m^{2*}day$) of at least 5 %, preferably more than 20 %, more preferably above 30 % and even more preferably above 50 %, compared to the same multilayer packaging film in the absence of the barrier properties, when the packaging article is exposed to r.h. above 65 % and/or when the packaging article is exposed to temperature above 30 °C.

The multilayer packaging film according to the invention can be a packaging material, preferably a container, a film or a sheet, especially for use in packaging of personal care, cosmetics, medical, pharmaceutical, household, industrial, food and beverage products where a high oxygen barrier is needed.

The packaging material can be flexible, rigid, semi-rigid or a combination thereof.

Rigid packaging articles typically have wall thicknesses in the range of 100 to 1000 micrometers. Typical flexible packages typically have thicknesses of 5 to 250 micrometers.

Specific articles containing the multilayer packaging film of the present invention include containers, films and sheets for packaging of food, beverages, cosmetics, pharmaceuticals, and personal care products where a high oxygen barrier is needed. Examples of beverage containers are: bottles for juices, sport drinks, or any other beverage where oxygen detrimentally affects the flavour, fragrance, performance (prevent vitamin degradation), or colour of the drink.

The articles of the present invention are also particularly useful as a sheet for thermoforming into rigid packages and films for flexible structures. Rigid packages include food trays and lids. Examples of food tray applications include dual ovenable food trays, or cold storage food trays, both in the base container and in the lidding (whether a thermoformed lid or a film), where the freshness of the food contents can decay with the ingress of oxygen.

The articles of the present invention also find use in the manufacture of cosmetic containers and containers for pharmaceuticals or medical devices.

Preferred articles of the present invention are rigid packaging articles, such as bottles and thermoformed sheets and flexible films.

More preferred articles of the present invention are hollow containers, which are expediently manufactured by any kind of blow moulding process known in the art.

Another subject of the invention is a method for the manufacture of the multilayer packaging film comprising the step of providing the polymers according to the layers (A), (B) and (C) and optionally (D), providing the additives (b) and (c) and comprising a mixing step and a shape forming process.

The shape forming process is dependent on the desired shape of the packaging article to be manufactured.

Containers are preferably made by blow moulding, injection moulding, injection and stretch blow moulding, extrusion blow moulding, compression moulding, compression and stretch blow moulding processes.

Films and sheets are preferably made by cast or blown film extrusion or co-extrusion processes, depending on the thickness required and on the number of layers needed to obtain specific properties, eventually followed by post-extrusion shaping processes like thermoforming, stretching or lamination. In the thermoforming process, the plastic sheet is heated to a pliable forming temperature, formed to a specific shape in a mold, and trimmed to create a final article. If vacuum is used, this process is generally called vacuum forming. In post-extrusion stretching processes an extruded film can be, for example, biaxially oriented by drawing. All the above listed processes are well-known in the art.

The additives (b) and (c) as well as the optional further customary additives (d) are expediently provided in the form of a masterbatch, in which the polymer is preferably the same as the polymer of the layer in which the respective additive is to be incorporated.

Masterbatches can be prepared by customary physical mixing processes.

A mixing apparatus for a liquid masterbatch can be a high speed dispersor (e.g. of CowlesTM type), a media mill, a three-roll mill, a submill or a rotor-stator type dispersor.

A mixing apparatus used to make solid masterbatches MB can be a mixer, extruder, kneader, press, mill, calender, blender, injection moulding machine, injection and stretch blow moulding machine (ISBM), extrusion blow moulding machine (EBM), compression moulding machine, compression and stretch blow moulding machine; more preferably a mixer, extruder, injection moulding machine, injection and stretch blow moulding machine, compression moulding machine, compression and stretch blow moulding machine; even more preferably a mixer, extruder, injection

and stretch blow moulding machine and extrusion blow moulding machine.

Extruders may be equipped with a metering system for introducing said additives and/or masterbatches into the main stream polymer. This metering may be carried out directly with one or more pure components or with one or more masterbatches.

The type of metering equipment used depends on the form in which the pure component or the masterbatch is metered.

In the case of solid component, a metering device of the feed screw type is usually employed and the point of introduction may be the main inlet of the extruder jointly with the feed of the main polymer granules, or in an unpressurized injection zone located along the extruder. For a solid masterbatch, the metering device may be a system comprising an additional extruder that pre-melts the masterbatch, pressurizes it and meters it by means of a metering pump, the amount of masterbatch metered being fed at a point along the main extruder advantageously without pressure.

For a liquid pure component or a liquid masterbatch, the metering device may be a system comprising one or more metering pumps which introduce the liquid masterbatch at the main inlet of the extruder jointly with the feed with the main polymer granules, without any pressure, or at a point under pressure located along the extruder.

Test Methods

The product properties are determined by the following methods, unless indicated otherwise:

Values of density are determined in accordance with ASTM D792 (g/cm$^3$).

Values of melt flow rates (MFR) are determined in accordance with ASTM D1238 (g/10 min at specified temperature and weight)

Measurement method for oxygen scavenging performance

In case of films:

Five (5) grams of a cast film sample are cut in stripes of homogenous dimensions and placed inside of a glass two-necks 550 mL Schlenk. The Schlenk is sealed hermetically with a fitted cap made of gas-impermeable material on one of the two necks and with a fit-suba-seal® septum of the other entrance. Measuring of the oxygen headspace is carried out by piercing the septum using the probe of a CheckMate® instrument and taking an aliquot of the atmosphere inside. Data are collected at regular time intervals. The oxygen concentration inside the Schlenk is then plotted against time. Between two measurements, the presence of an extra adhesive septum on top of the fit-suba-seal® septum ensures the lack of oxygen ingress through the pierced hole.

Measurement method for oxygen transmission rate performance

In case of films:

All OTR measurements reported have been determined according to DIN 53380-3 and they were measured with an instrument specifically designed for high OTR films available from Fachlaboratorium für Permeationsprüfung, Wiesbaden, Germany.

The OTR cell wherein the samples are placed has two sides. On one side is the oxygen which permeates to the other side where a nitrogen carrier gas is and which carries the permeated oxygen to the detector. Relative humidity can be fine-tuned on both sides of the film.

Haze measurement:

Values of haze are determined on a 50 µm film in accordance with ASTM D1003, Procedure A (% of transmitted light which, in passing through a specimen, deviates from the incident beam by forward scattering)

$$\%Haze = (T_{diffuse} / T_{total}) * 100$$

where T = % transmission.

Films were manufactured as described below and the haze of the films was measured with a hazemeter haze-gard dual

(BYK Gardner). D65 illuminant was used with a CIE 1964 10° standard observer. The haze is defined as the percent of the CIE Y diffuse transmittance to the CIE Y total transmission.

Examples

All samples produced were 117 to 119 μm five-layer cast films with a LDPE/tie/EVOH/tie/LDPE structure and respective thicknesses 50 μm/6 μm/5 to 7 μm/6 μm/50 μm. This multilayer system corresponds to the three-layer system of FIG1, but with two additional adhesive layers (tie layers).
In all structures the low-density polyethylene used was LDPE Lupolene® 2420 (LyondellBasell) with a M.F.I. 4 g/10 min 190 °C 2,16 Kg; density 0.924 g/cm$^3$ (ASTM D3236-88). The ethylene vinyl-alcohol copolymer (EVOH) used was EVAL® H171 B with 38 mol.-% of ethylene content, a M.F.I. 1,7 g/10 min 190 °C 2,16 Kg; density 1,17 g/cm$^3$ (ISO 1183). The tie resin used was Admer® AT1707 (Mitsui) with a M.F.I. 4.3 g/10 min 190 °C 2,16 Kg; density 0.91 g/cm$^3$ (ASTM D1505).
% by weight mentioned in the following examples are based on the total weight of the mixture, composition or article; parts are parts by weight;
"ex" means example; "cpex" means comparative example; MB means masterbatch; CO means compound; unless indicated otherwise.

Substances used

Component A1:

Low Density Polyethylene (LDPE) powder: LDPE Riblene®, M.F.I. 2 g/10 min 190 °C 2,16 Kg; density 0.925 g/cm$^3$ (ASTM D3236-88).

Component b1:
Dercolyte® S125

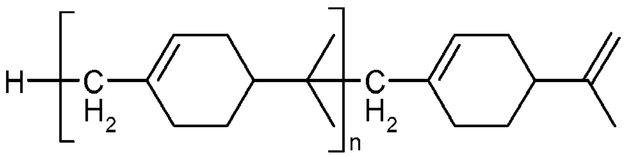

Component c1:

Cobalt stearate (9.5 % Cobalt concentration)

Component c2:

Manganese stearate (8.5 % Manganese concentration).

Masterbatches MB1 to MB3

The components were homogenized together on a Leistritz® ZSE18HP extruder at the temperature of 140 °C to obtain solid masterbatches MB1 to MB3; Table 1 gives the details.

Table 1

| Masterbatches (MB) | Components used [parts] | | | |
|---|---|---|---|---|
| | A1 | b1 | c1 | c2 |
| MB1 | 60 | 30 | | |
| MB2 | 97 | | 3 | |
| MB3 | 94 | | | 6 |

Examples: ex1, ex2, and cpex1:

Component A1 and the masterbatches MB1, MB2 and MB3 were mixed and homogenized in the ratios according to Table 2.

Table 2

| ex-cpex | Compounds | Components used [parts] | | | |
|---|---|---|---|---|---|
| | | A1 | MB1 | MB2 | MB3 |
| cpex 1 | CO1 (virgin LDPE) | 100 | | | |
| ex1 | CO2 | 90.5 | 6.5 | 3 | |
| ex2 | CO3 | 90 | 6.5 | | 3.5 |

The obtained compounds CO1 to CO3 were used to manufacture the above mentioned five-layer films (for ex1 and ex2 with a 50 μm active oxygen-scavenging internal layer as in FIG1, left picture) on a cast film machine Dr. Collin® Extruder 20P. As an example of operational mode, components A1, MB1, MB2 or MB3 were inserted through one hopper applied to the main stream of a Dr. Collin® Extruder 20P (model 20P; 30mm screw diameter 1:30 ratio) while internal barrel temperature was kept between 230 and 240°C; EVOH, tie resin, and LDPE necessary for extruding the remaining layers of the multilayer films were added into separate hoppers each applied to the main stream of a Dr. Collin® Extruder 20P (model 20P; 30mm screw diameter 1:30 ratio); the obtained co-extruded cast films were then winded from the unit and stored for the necessary testing.

Haze measurement:

Total haze is the preferred method of measuring the clarity of POs articles, which can determine their suitability for packaging applications requiring high levels of transparency. Haze was measured on above prepared PO films obtained from compounds CO1 to CO3. Table 3 gives the details.

Composition CO2 and CO3 of the present invention clearly show a level of clarity very similar to virgin LDPE, as in CO1.

Table 3

| Compounds | Haze (%) |
|---|---|
| CO1 | 1.5 |
| CO2 | 1.9 |
| CO3 | 1.8 |

Oxygen barrier performance:

The oxygen barrier performance corresponding to the films prepared above was measured by following the methods described above.

Table 4 shows the measured OTR (in $cm^3/m^2$*day) of the above prepared multilayer films exposed to 50 % and 100 % r.h. in a nitrogen carrier gas (from now on carrier gas), respectively, where the active oxygen scavenger layer is an internal LDPE layer of 50 μm thickness with compositions CO1 and CO3.

It can clearly be seen that for each EVOH thickness the scavenger is able to compensate the EVOH loss of performance due to high r.h., maintaining values of OTR equivalent to the film without scavenger when exposed to low r.h.

Table 4

| EVOH Layer | OTR [$cm^3/m^2$*day] @ 50 % r.h ($N_2$ carrier gas) | | OTR [$cm^3/m^2$*day] @100 % r.h.($N_2$ carrier gas) | |
|---|---|---|---|---|
| | Neutral (CO1) | Scavenger (CO3) | Neutral (CO1) | Scavenger (CO3) |
| 5 μm | 20.2 | 13.2 | 37.0 | 23 |
| 6 μm | 6.1 | 2.44 | 16.5 | 6.9 |

(continued)

| EVOH Layer | OTR [$cm^3/m^2$*day] @ 50 % r.h ($N_2$ carrier gas) | | OTR [$cm^3/m^2$*day] @100 % r.h.($N_2$ carrier gas) | |
|---|---|---|---|---|
| | Neutral (CO1) | Scavenger (CO3) | Neutral (CO1) | Scavenger (CO3) |
| 7 μm | 4.7 | 1.75 | 14.6 | 4.9 |

Table 5 shows the measured OTR (in $cm^3/m^2$*day) of the above prepared multilayer films exposed at 23°C, 50°C and 90 °C, respectively, where the active oxygen scavenger layer is an internal LDPE layer of 50 μm thickness with compositions CO1 and CO3.

Table 5

| EVOH Layer | OTR @ 23 °C | | OTR @ 50 °C | | OTR @ 90 °C | |
|---|---|---|---|---|---|---|
| | Neutral (CO1) | Scavenger (C03) | Neutral (CO1) | Scavenger (C03) | Neutral (CO1) | Scavenger (C03) |
| 5 μm | 20.9 | 10.8 | 131 | 74.1 | 1890 | 1250 |

In Table 6, the depletion of an oxygen atmosphere by multilayer films containing compositions CO2 and CO3 is reported against the time elapsed (measured in days) from the moment the Schlenk where they are contained is hermetically sealed, leaving inside an air atmosphere (20.9 % oxygen). Measurements of the oxygen concentration inside of the Schlenks are reported in $O_2$ %. The oxygen scavenging capacity per day in the same period is reported as mL $O_2$/g Scavenger, according to the formula

$$\text{mL } O_2/\text{g Scavenger} = (\%O_{2\,start} - \%O_{2\,fin}) * 0.01 * V_{flask\,free} / (\text{g active } O_2\text{Scavenger})$$

For every composition the measurements have been interrupted when one of following conditions were met: end of the interesting period of desired shelf life (84 days), or oxygen content at nearly 0 % (close to the lower accuracy limit of the measurement system).

Table 6

| Time [days] | COMPOUNDS | | | |
|---|---|---|---|---|
| | CO2 | | CO3 | |
| | % $O_2$ | mL $O_2$/g Scavenger | % $O_2$ | mL $O_2$/g Scavenger |
| 0 | 20.9 | 0 | 20.9 | 0 |
| 2 | 20.3 | 17.5 | 15.8 | 265.5 |
| 7 | 19.5 | 68.2 | 14.9 | 312.8 |
| 14 | 19.1 | 86.4 | 13.8 | 370.7 |
| 21 | 18.8 | 100.1 | 12.9 | 418.0 |
| 28 | 18.3 | 122.8 | 12.5 | 439.1 |
| 35 | 18.0 | 136.5 | 12.8 | 423.3 |
| 42 | 17.6 | 154.7 | 13.8 | 370.7 |
| 49 | 17.5 | 159.2 | 12.6 | 433.8 |
| 56 | 17.2 | 172.9 | 13.0 | 415.4 |
| 63 | 16.8 | 191.1 | 11.7 | 481.1 |
| 70 | 16.8 | 191.1 | 11.4 | 498.2 |
| 77 | 16.8 | 191.1 | 11.4 | 498.2 |

(continued)

| Time [days] | COMPOUNDS | | | |
|---|---|---|---|---|
| | CO2 | | CO3 | |
| | % $O_2$ | mL $O_2$/g Scavenger | % $O_2$ | mL $O_2$/g Scavenger |
| 84 | 16.8 | 191.1 | 11.4 | 498.2 |

## Claims

**1.** A multilayer packaging film comprising at least three different types of layers (A), (B), and (C):

(A) is at least one outer layer,
(B) is at least one passive oxygen barrier layer,
(C) is at least one active oxygen scavenging layer,

**characterized in that**

- the at least one outer layer (A) is a thermoplastic polymer;
- the at least one passive oxygen barrier layer (B) is selected from the group consisting of ethylene vinyl alcohol copolymers, polyvinylchloride, copolymers of polyvinyl chloride, polyvinyl alcohol, polyvinylidene dichloride, copolymers of polyvinylidene dichloride, polyacrylonitrils, copolymers of polyacrylonitrils, polyethylene terephthalate, polyethylene naphthalate, polyethylenefuranoate, polysiloxanes, and polyamides;
- the at least one active oxygen scavenging layer (C) comprises

a) a plastic material which is a polyolefin, a polyolefin copolymer or a polystyrene, and additives (b) and (c), wherein
b) is a polyterpenic resin; and
c) is a transition metal catalyst.

**2.** The multilayer packaging film as claimed in claim 1 wherein the additives b) and c) are combined in the same oxygen scavenging layer.

**3.** The multilayer packaging film as claimed in claim 1 or 2 further comprising at least one inner layer (D) which is a thermoplastic polymer.

**4.** The multilayer packaging film as claimed in any of the preceding claims, wherein at least one of the active oxygen scavenging layers (C) is sandwiched between a passive oxygen barrier layer (B) and an inner layer (D) or, when this is lacking, the inside of the packaging itself.

**5.** The multilayer packaging film as claimed in any of the preceding claims wherein one or more further layers selected from the group consisting of moisture barrier layers, strengthening layers and adhesive layers are positioned between at least two of the layers (A), (B), (C), and (D).

**6.** The multilayer packaging film as claimed in any of the preceding claims wherein the polyterpenic resin (b) contains monomers selected form alpha-pinene, beta-pinene, gamma-ter-pinene, limonene, norbornene, myrcene, phellandrene, carvone, camphene, 2-carene, 3-carene, perillyl alcohol, perillyl aldehyde, perillyl acid, alkyl esters of perillyl alcohol, aryl esters of perillyl alcohol, arylalkyl esters of perillyl alcohol, alkylaryl esters of perillyl alcohol, alpha-ionone, beta-ionone, beta-citronellol, beta-citronellene, citronellal, citronellic acid, alkyl esters of beta-citronellol, aryl esters of beta-citronellol, arylalkyl esters of beta-citronellol, alkylaryl esters of beta-citronellol, geraniol, geranial, alkyl esters of geraniol, aryl esters of geraniol, arylalkyl esters of geraniol, alkylaryl esters of geraniol, linalool, alkyl esters of linalool, aryl esters of linalool, arylalkyl esters of linalool, alkylaryl esters of linalool, nerolidol, alkyl esters of nerolidol, aryl esters of nerolidiol, arylalkyl esters of nerolidiol, alkylaryl esters of nerolidiol, verbenol, verbenone, alkyl esters of verbenol, aryl ester verbenol, arylalkyl esters of verbenol, alkylaryl esters of verbenol and mixtures thereof.

7. The multilayer packaging film as claimed in any of the preceding claims wherein the polyterpenic resin (b) is a homopolymer or copolymer of alpha-pinene, beta-pinene or mixtures of alpha/beta pinene.

8. The multilayer packaging film as claimed in any of the preceding claims wherein the transition metal catalyst (c) contains iron, nickel, manganese, cobalt or copper.

9. The multilayer packaging film as claimed in any of the preceding claims wherein, the additive (b) is used in an amount of from 0.05 to 10 % by weight, based on the total weight of the respective active oxygen scavenging layer (C).

10. The multilayer packaging film as claimed in any of the preceding claims wherein the transition metal catalyst (c) is used in an amount of from 0.001 to 1 % by weight, based on the total weight of the respective active oxygen scavenging layer (C).

11. The multilayer packaging film as claimed in any of the preceding claims wherein the thickness of the passive oxygen barrier layers in comparison to the total thickness of the multilayer film ranges between 3 to 30 %.

12. The multilayer packaging film as claimed in any of the preceding claims wherein the thickness of the active oxygen scavenging layers in comparison to the total thickness of the multilayer film ranges from 9 to 43 %.

13. The multilayer packaging film as claimed in any of the preceding claims, which is in the form of a container.

14. A method for the manufacture of a multilayer packaging film as claimed in any of the preceding claims comprising the step of providing the polymers according to the layers (A), (B) and (C) and optionally (D), providing the additives (b) and (c) and comprising a mixing step and a shape forming process.

15. The method as claimed in claim 14 wherein the additives (b) and (c) are provided in the form of a masterbatch.

FIG 1.

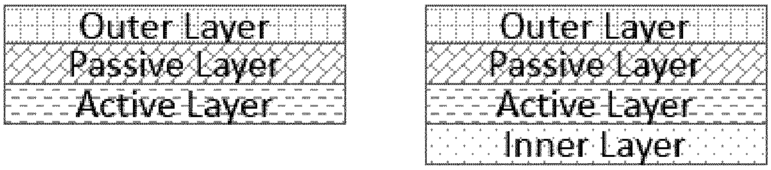


FIG2

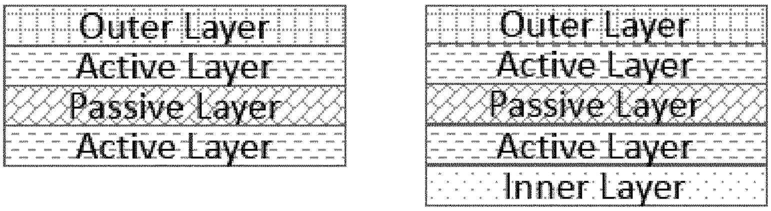


FIG3

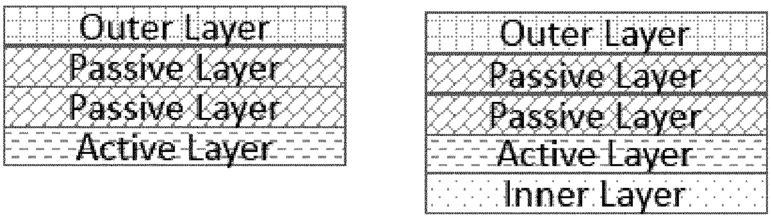


FIG4

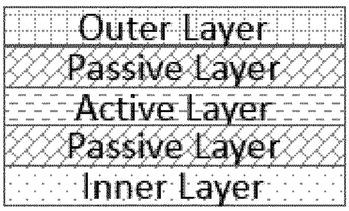

FIG5

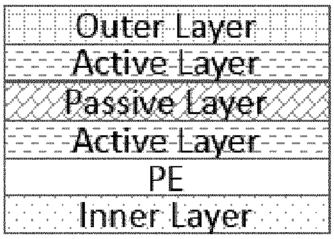


FIG6

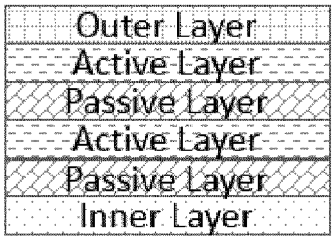


FIG7

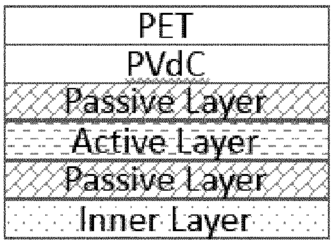


FIG8

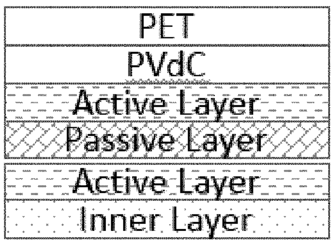

Europäisches Patentamt
European Patent Office
Office européen des brevets

# EUROPEAN SEARCH REPORT

Application Number
EP 16 18 3923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/104033 A1 (SCHMIDT RICHARD P [US] ET AL) 19 May 2005 (2005-05-19)<br>* paragraphs [0021] - [0023], [0037], [0067], [0072] - [0074], [0076] * | 1-8,14, 15 | INV.<br>B32B27/08<br>B32B9/02<br>B32B27/06<br>B32B27/18<br>B32B27/28<br>B32B27/30<br>B32B27/32<br>B32B27/34<br>B32B27/36 |
| A | US 2001/023025 A1 (JERDEE GARY D [US] ET AL) 20 September 2001 (2001-09-20)<br>* paragraphs [0031], [0051], [0071]; claims 4,22 * | 1-15 | |
| A | US 2009/061061 A1 (BECKWITH SCOTT [US] ET AL) 5 March 2009 (2009-03-05)<br>* the whole document * | 1-15 | |

TECHNICAL FIELDS SEARCHED (IPC)

B32B

The present search report has been drawn up for all claims

1

| Place of search | Date of completion of the search | Examiner |
|---|---|---|
| The Hague | 11 January 2017 | Songy, Odile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 18 3923

This annex lists the patent family members relating to the patent documents cited in the above-mentioned European search report. The members are as contained in the European Patent Office EDP file on
The European Patent Office is in no way liable for these particulars which are merely given for the purpose of information.

11-01-2017

| Patent document cited in search report | Publication date | Patent family member(s) | Publication date |
|---|---|---|---|
| US 2005104033 A1 | 19-05-2005 | US 2005104033 A1 | 19-05-2005 |
| | | WO 2005056721 A1 | 23-06-2005 |
| US 2001023025 A1 | 20-09-2001 | AR 032727 A1 | 26-11-2003 |
| | | AT 320198 T | 15-04-2006 |
| | | AU 761571 B2 | 05-06-2003 |
| | | AU 5570099 A | 21-03-2000 |
| | | BR 9913209 A | 18-09-2001 |
| | | CA 2340099 A1 | 09-03-2000 |
| | | CN 1314789 A | 26-09-2001 |
| | | DE 69930395 T2 | 05-04-2007 |
| | | EP 1107672 A1 | 20-06-2001 |
| | | JP 4243433 B2 | 25-03-2009 |
| | | JP 2002523311 A | 30-07-2002 |
| | | MX PA01001722 A | 08-04-2002 |
| | | NO 20010958 A | 26-02-2001 |
| | | NZ 509662 A | 31-10-2003 |
| | | TW 568832 B | 01-01-2004 |
| | | US 6333087 B1 | 25-12-2001 |
| | | US 6569506 B1 | 27-05-2003 |
| | | US 2001023025 A1 | 20-09-2001 |
| | | US 2003152727 A1 | 14-08-2003 |
| | | WO 0011972 A1 | 09-03-2000 |
| US 2009061061 A1 | 05-03-2009 | AU 2008296769 A1 | 12-03-2009 |
| | | BR PI0816076 A2 | 24-02-2015 |
| | | CN 101795864 A | 04-08-2010 |
| | | EP 2183103 A2 | 12-05-2010 |
| | | JP 5329545 B2 | 30-10-2013 |
| | | JP 2010537849 A | 09-12-2010 |
| | | KR 20100072222 A | 30-06-2010 |
| | | KR 20130024956 A | 08-03-2013 |
| | | NZ 582921 A | 30-11-2012 |
| | | NZ 603368 A | 30-05-2014 |
| | | RU 2010110435 A | 27-09-2011 |
| | | US 2009061061 A1 | 05-03-2009 |
| | | US 2014314920 A1 | 23-10-2014 |
| | | WO 2009032418 A2 | 12-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8609744 B
- EP 2112201 A
- EP 0918818 A
- WO 9625058 A
- WO 0236670 A